# EUROPEAN PATENT APPLICATION

(11) **EP 4 075 603 A1**
(43) Date of publication of application: **19.10.2022**
(21) Application number: 22165146.6
(22) Date of filing: 29.03.2022
(51) Int. Cl.: H01R 4/20, H01R 9/05, H01R 43/048, H01R 13/6591

(54) **ELECTRICAL CRIMP FERRULE, METHOD FOR FERRULE MOUNTING AND METHOD FOR ASSEMBLING AN ELECTRICAL CONNECTING DEVICE**

(30) Priority: 15.04.2021 DE 102021109486
(71) Applicant: TE Connectivity Germany GmbH, 64625 Bensheim (DE)
(72) Inventor: KLINGLER, Dominik, 64625 Bensheim (DE); STRELOW, Markus, 64625 Bensheim (DE)
(74) Representative: Patentanwaltskanzlei WILHELM & BECK

(57) **Abstract**

The invention relates to an electrical crimp ferrule (20), in particular hf-crimp ferrule (20), for an electrical connecting device of an electrical multi-core cable preferably for the motor vehicle sector, comprising a circumferential centre portion (200) which integrally connects a first circumferential flank (210) to a second circumferential flank (220) of the crimp ferrule (20), wherein,
in order to implement a mainly or substantially circular crimp cross section on a non-circular or circular inner cross section (50) of the multi-core cable (5), the crimp ferrule (20) itself: has at least one crimp diameter compensation means (212, 222) for crimping the crimp ferrule (20) onto the substantially non-circular inner cross section (50), or has had at least one crimp diameter compensation means (212, 222) for crimping the crimp ferrule (20) onto the substantially circular inner cross section (50).

## Description

The invention relates to an electrical crimp ferrule for an electrical connecting device of an electrical multi-core cable preferably for the motor vehicle sector. The invention further relates to a methodfor ferrule mounting an electrical crimp ferrule on an electrically stripped inner cross section of a multi-core cable, and to a method for assembling an electrical connecting device at/on an electrical multi-core cable. In addition, the invention relates to an electrical connecting device and to an electrical entity preferably for the vehicle sector in each case.

In the electrical sector (electronics, electrical engineering, electrics, electric energy technology, etc.), a large number of electric connector means or connector devices, socket, pin and/or hybrid connectors etc. are known - referred to below as (electrical) connectors (also: mating connectors) - that serve to transmit electrical currents, voltages, signals and/or data with a wide range of currents, voltages, frequencies and/or data rates. In the area of low, medium or high voltages and/or currents, and in particular in the vehicle sector, such connectors have to ensure transmission of electrical power, signals and/or data permanently, repeatedly and/or for a short time after a comparatively long period of inactivity in mechanically stressed, warm, possibly hot, contaminated, damp and/or chemically aggressive environments. Owing to a wide range of applications, a large number of specially designed connectors are known.

Such a connector and, if applicable, its associated (e.g. in the case of a connector means or a connector device) or higher-level housing (e.g. in the case of a connector device) can be fitted to an electrical line, a cable, a cable harness etc. - referred to below as an assembled (electrical) cable (also: electrical entity) - or to/in an electrical device or means, such as e.g. to/in a housing, to/on a leadframe, to/on a circuit board etc., of a (power-) electrical, electro-optical or electronic component or a corresponding aggregation etc. (electrical entities).

If a connector (with/without a housing) is located on a cable, a line or a cable harness, this is also called a flying (plug) connector or a plug, a socket or a coupling; if it is located on/in an electrical, electro-optical or electronic component, aggregation etc., this is also called a connector device, such as e.g. a (built-in/mounted) connector, a (built-in/mounted) plug or a (built-in/mounted) socket. A connector on such a device is further often also referred to as a (plug) receptacle, pin header, pin strip or header. - In the context of electrical power engineering (generating, converting, storing and transporting high-voltage electrical current in electricity grids, preferably with three-phase high-voltage transmission), the term cable fittings is used because of their comparatively complex structure.

Such a connector has to ensure proper transmission of electricity, wherein mutually corresponding and partially complementary connectors (connector and mating connector) usually have locking devices and/or fastening devices for permanent but generally releasable locking and/or fastening of the connector to/in the mating connector or vice versa. - An electrical connecting device for a connector, e.g. comprising or at least having: an actual electrical contact means (terminal; usually formed materially in one piece or integrally, e.g. a (crimp) contact element etc.) or an electrical contact device (terminal; usually formed in one piece and from several or two parts, or materially in one piece, e.g. a (crimp) contact device), further has to be held securely therein.

A connecting device may itself be formed from several parts. Here, a connecting device may comprise or have e.g. two or more electrical terminals. This is the case e.g. with coaxial or twinaxial or twisted-pair connecting devices which may comprise or have one or two inner, electrical terminals (male and/or female) and one outer terminal (shield contact sleeve). Furthermore, a ferrule (support sleeve) may be established within the outer terminal in the connecting device. - In the case of a (pre-)assembled electrical cable, such a connecting device may be provided as a connector (cf. above), that is to say without a housing, for example in a flying manner.

Efforts are continually being made to improve electrical connectors and their connecting devices, in particular due to miniaturization to make them more robust, design them more effectively and produce them at lower cost. Here, rules apply to hf-connecting devices (hf: high-frequency, definition here: transmission frequencies greater than 3 to greater than 300 MHz and well into the GHz range (about 150 GHz)) that are considerably different to those for conventional connecting devices (definition here: transmission frequencies lower than about 3 MHz), since the wave properties of electricity are evident in hf-technology in particular. In the case of electrical hf-plug connections, maintaining signal integrity is proving to be an ever greater obstacle.

There is an observable trend for cable manufacturers to make the shields in multi-core cables, such as e.g. twisted-pair cables, twinaxial cables etc. increasingly more oval because more and more manufacturers are laying the shields of the multi-core cables directly around the inner conductors of the multi-core cables instead of around additional fillers as before. However, the insulation sheaths of the multi-core cables remain substantially circular. The conventional crimp ferrules for crimp connecting devices of such multi-core cables are designed in such a way that they are suitable only for being crimped onto a substantially circular shield. - It is therefore an object of the invention to specify an improved connecting device.

The object of the invention is achieved by means of an electrical crimp ferrule, in particular an hf-crimp ferrule; by a methodfor ferrule mounting an electrical crimp ferrule, in particular an hf-crimp ferrule; by a method for assembling an electrical connecting device, in particular an hf-connecting device; by means of an electrical connecting device, in particular an hf-connecting device; and by means of an electrical entity, in particular an hf-entity. - Advantageous developments, additional features and/or advantages of the invention can be found in the dependent claims and the following description.

The crimp ferrule according to the invention comprises a circumferential centre portion which integrally connects a first circumferential flank to a second circumferential flank of the crimp ferrule, wherein, in order to create a mainly or substantially circular crimp cross section (outer shape) on a non-circular or circular inner cross section of the multi-core cable, the crimp ferrule itself:
has at least one crimp diameter compensation means for crimping the crimp ferrule onto the substantially non-circular inner cross section, or has had at least one crimp diameter compensation means for crimping the crimp ferrule onto the substantially circular inner cross section. - In this case, the inner cross section is preferably that inner cross section of the multi-core cable which is formed by a cable shield, in particular an outer cable shield, or by a layer of the multi-core cable situated directly below a cable shield.

A crimp diameter compensation means is further defined in such a way that merely elastic deformation of the inner cross section of the multi-core cable is or was possible using it. The crimp diameter compensation means is, in particular, not formed in such a way that the inner cross section of the multi-core cable is or was plastically deformable, able to be pierced (able to be cut open, able to be torn open, able to be perforated etc.) etc. using it. The crimp ferrule preferably consists of a metal (sheet) or metallized material layer with an in particular constant thickness.

A non-circular inner cross section of the multi-core cable is intended to be understood to mean e.g. an elliptical or oval inner cross section of the multi-core cable on the other side of a circular inner cross section. - The first of the two cases relates to compensating for the relatively small radii or diameters of the non-circular inner cross section of the multi-core cable to form a mainly or substantially circular outer cross section of the crimp ferrule. The second case relates to the omission of compensation for all radii or diameters of the circular inner cross section of the multi-core cable, wherein a mainly or substantially circular outer cross section of the crimp ferrule is likewise produced.

The crimp ferrule can have or have had precisely or at least two crimp diameter compensation means. A crimp diameter compensation means can further be established or have been established in a circumferential flank and/or the circumferential centre portion. Furthermore, the crimp ferrule can have or have had precisely one crimp diameter compensation means in each of its circumferential flanks. In addition, the crimp ferrule cannot have or have had a crimp diameter compensation means in its circumferential centre portion.

The respective crimp diameter compensation means can be established or have been established integrally in the crimp ferrule. The respective crimp diameter compensation means can further be formed or have been formed as a projection projecting radially inwards into the crimp ferrule. In such a case, a shield contact sleeve can be crimped onto a mainly or substantially circular circumferential face on the multi-core cable. Here, an outer conductor of the multi-core cable can be folded over onto the crimp ferrule.

The respective crimp diameter compensation means can be formed or have been formed as a projection projecting radially outwards away from the crimp ferrule. Here, it is preferred that an outer conductor of the multi-core cable is not folded over onto the crimp ferrule. The respective crimp diameter compensation means can further be formed or have been formed as a bead, a rib, a stamped portion, a fold or a dimple in the crimp ferrule. It is also possible to assemble a single crimp diameter compensation means from a plurality or large number of individual relatively small devices, such as e.g. dimples, or to level these again for the circular inner cross section.

The crimp diameter compensation means as a bead may be formed or have been formed as a longitudinal bead running substantially in a longitudinal direction of the crimp ferrule. This bead may be established or have been established with both of its longitudinal ends inside the crimp ferrule in the longitudinal direction. This bead can further be established or have been established with both of its circumferential ends inside the crimp ferrule in the circumferential direction of the crimp ferrule.

A free edge of the crimp ferrule extending in the longitudinal direction can be substantially free of an extent substantially solely in the longitudinal direction. As a result, the hf-properties (signal integrity) of the crimp ferrule are improved. The free edges of the crimp ferrule situated opposite each other in the circumferential direction can be formed in a complementary manner and, in the crimped state of the crimp ferrule, situated opposite each other substantially in a form-fitting manner. In addition, in the crimped state of the crimp ferrule, a circumferential tooth (e.g. triangular) of a circumferential flank can engage between two circumferential teeth (e.g. likewise triangular) of the circumferential flank situated opposite the first-said circumferential flank in the circumferential direction. As a result, stranded wires of a shielding braid are captured better when the ferrule is crimped onto the inner cross section.

In the method according to the invention for ferrule mounting, in a feed step of the method, a crimp ferrule with at least one crimp diameter compensation means is provided for crimping the crimp ferrule onto the inner cross section. Following the feed step, the crimp ferrule is crimped onto an electrically stripped, substantially non-circular inner cross section of the multi-core cable; or
the at least one crimp diameter compensation means is removed from the crimp ferrule and the crimp ferrule is crimped onto an electrically stripped, substantially circular inner cross section of the multi-core cable.

When the crimp ferrule is crimped onto the inner cross section, substantially the entire crimp ferrule is substantially plastically deformed. In the crimped state, the two circumferential flanks of the crimp ferrule are situated opposite each other in the circumferential direction on the inner cross section, wherein the free circumferential edges of the circumferential flanks can engage into one another, wherein one circumferential edge can take up space in the other circumferential edge with a complementary shape (cf. above).

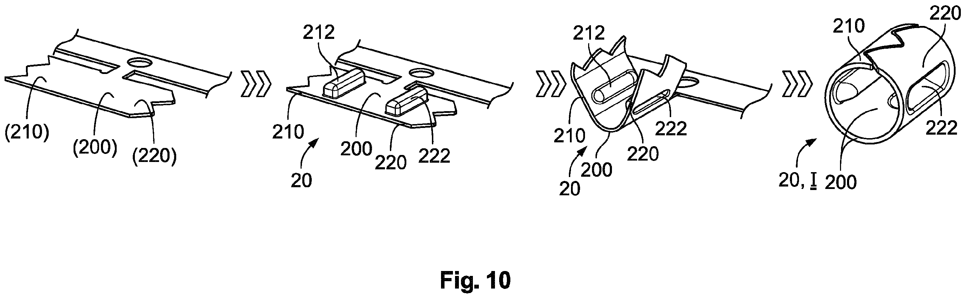

In a preparation step for ferrule mounting, at least one crimp diameter compensation means can be established on/in the crimp ferrule (cf. Fig. 10). Here, the at least one crimp diameter compensation means can preferably be plastically formed in or preferably plastically formed out into a material layer of the crimp ferrule. This may take place e.g. in a crimping tool (directly) or in a tool mounted in front of the actual crimping tool before the crimp ferrule is crimped onto the inner cross section. - However, the preparation step is optional since the crimp ferrules required for mounting ferrules may already have their at least one crimp diameter compensation means as early as when the crimping machine or crimping installation is supplied with the crimp ferrules, e.g. on a reel.

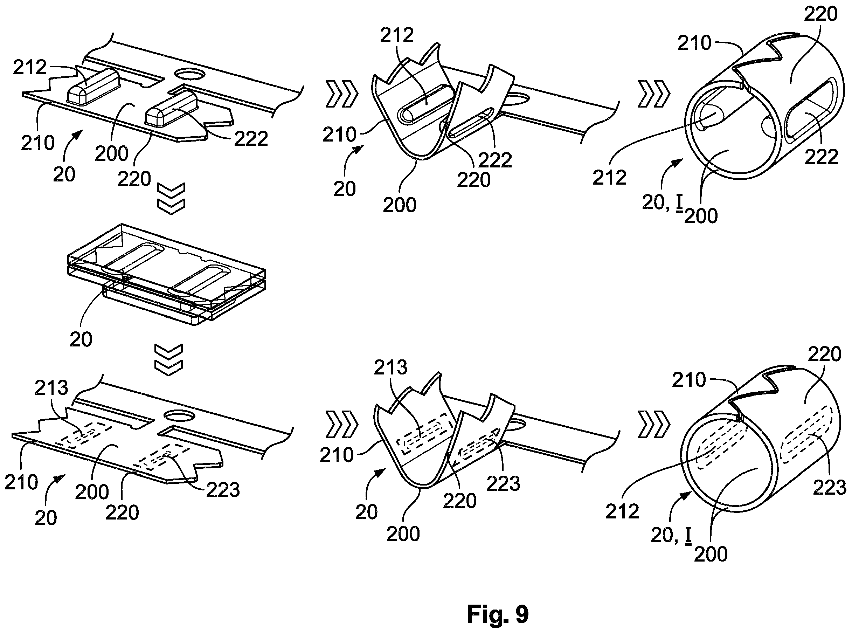

The method can be designed in such a way that, by way of the method, the originally same crimp ferrule can be crimped both onto the non-circular and also the circular inner cross section (cf. Fig. 9). Depending on a multi-core cable available at the time of ferrule mounting, a crimp ferrule currently to be crimped on can be crimped either onto the electrically stripped, substantially non-circular or substantially circular inner cross section. A crimp ferrule to be crimped onto a substantially non-circular inner cross section is placed with a crimp diameter compensation means onto a small or minimum diameter of the inner cross section.

The removal of the at least one crimp diameter compensation means from the crimp ferrule can take place in a planar (cf. Fig. 9) or pre-bent state of the material layer of the crimp ferrule. This can be carried out e.g. by way of levelling the material layer of the crimp ferrule. That is to say, e.g., that the crimp diameter compensation means is pressed flat into a plane of the crimp ferrule. The removal of the at least one crimp diameter compensation means from the crimp ferrule can further take place by way of pressing the crimp diameter compensation means out of the crimp ferrule. As a result, a recess, in particular a passage recess, can be created in the crimp ferrule.

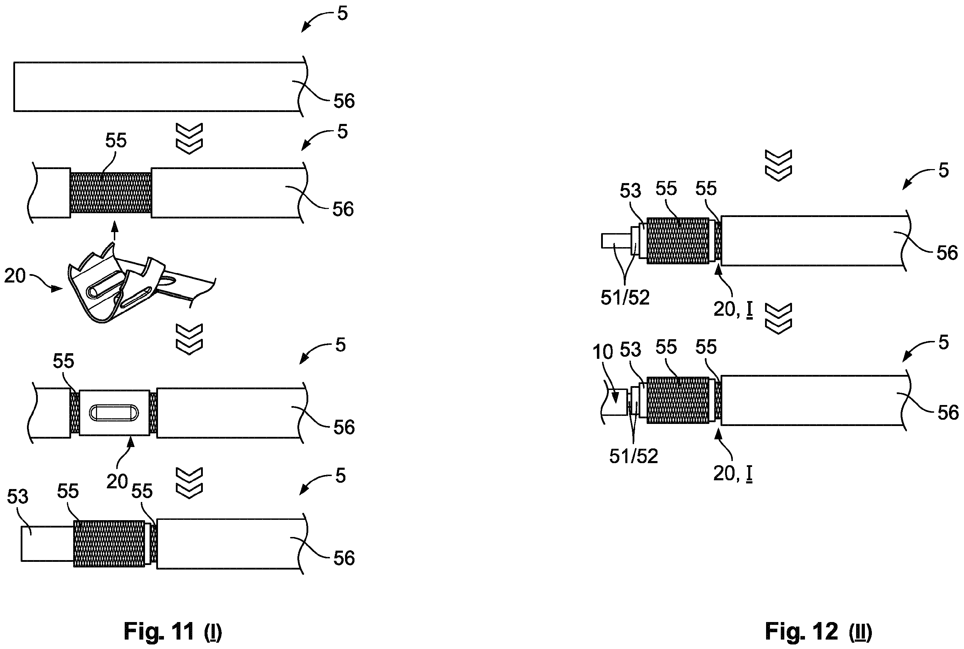

The crimp ferrule can be crimped onto a cable shield of the multi-core cable. The cable shield may possibly be folded over onto the crimp ferrule after the crimp ferrule has been crimped onto the inner cross section. In addition, the crimp ferrule can be formed as a crimp ferrule according to the invention. - Also cf. Fig. 11 up to here.

In the assembly method (cable assembly) according to the invention, in a first step, the crimp ferrule is crimped onto a cable shield of the multi-core cable by way of a method according to the invention for ferrule mounting (cf. Fig. 11). In a second step following the first step, the inner terminals are fitted onto the inner conductors of the multi-core cable (cf. Fig. 12). In a third step following the second step, a shield contact sleeve is crimped onto the crimp ferrule, or the cable shield and a protective sheath of the multi-core cable (cf. Fig. 13).

For the first step, the multi-core cable is preferably already in its intended position. In the first step, the multi-core cable, by way of a portion freed of its protective sheath, can be inserted into the crimp ferrule, and/or vice versa. After the first step or in the second step, a free longitudinal end portion of the cable shield can be folded over radially onto the outside of the crimp ferrule. The fitting of the inner terminals in the second step can take place e.g. by way of a method for crimping, (compacting) welding, soldering etc.

The connecting device according to the invention comprises an inner electrical terminal, a crimp ferrule according to the invention and an electrical shield contact sleeve. If the connecting device is mounted on a multi-core cable with a non-circular inner cross section, the mounted crimp ferrule, by way of its crimp diameter compensation means, is seated on a relatively small or minimum diameter of the inner cross section. - The entity according to the invention has a connecting device, wherein the connecting device is formed as a connecting device according to the invention, and/or the connecting device is mounted on a multi-core cable by way of an assembly method according to the invention.

Here, the entity can further have, e.g. in addition to an entity housing, at least one mechanical, electrical, electronic, optical and/or fluidic means or device. Such an entity can (also) be formed e.g. as a means, a device, a connector (twisted-pair connector, twinaxial connector etc.), an assembled multi-core cable (twisted-pair cable, twinaxial cable etc.), an assembly, a circuit board, a component, a module, a unit, an instrument, an appliance, an installation, a system, etc.

The invention is explained in greater detail below on the basis of exemplary embodiments with reference to the appended drawing which is diagrammatic and not to scale. Portions, elements, component parts, units, components and/or patterns which have an identical, unique or analogous configuration and/or function are identified by the same reference signs in the description of the figures (see below), the list of reference signs, the patent claims and in the figures (Figs) of the drawing. A possible alternative which is not explained in the description of the invention (see above), is not shown in the drawing and/or is not definitive, a static and/or kinematic reversal, a combination etc. with respect to the exemplary embodiments of the invention or a component, a pattern, a unit, a component part, an element or a portion thereof, can further be gathered from the list of reference signs and/or the description of the figures.

In the case of the invention, a feature (portion, element, component part, unit, component, function, variable etc.) can be of positive configuration, that is to say present, or of negative configuration, that is to say absent. In this specification (description (description of the invention (see above), description of the figures (see below)), list of reference signs, patent claims, drawing), a negative feature is not explained explicitly as a feature if value is not placed on it being absent according to the invention. That is to say, the invention which is actually made and is not constructed by way of the prior art consists in omitting the said feature.

A feature of this specification can be used not only in a specified manner and/or way, but rather also in another manner and/or way (isolation, combination, replacement, addition, on its own, omission, etc.). It is possible, in particular, in the description, the list of reference signs, the patent claims and/or the drawing, to replace, add or omit a feature in the patent claims and/or the description on the basis of a reference sign and a feature which is assigned to it, or vice versa. Furthermore, a feature in a patent claim can be interpreted and/or specified in greater detail as a result.

The features of the description can also be interpreted as optional features (in view of the (initially mostly unknown) prior art); that is to say, each feature can be considered to be an optional, arbitrary or preferred feature, that is to say a feature which is not mandatory. Therefore, a separation of a feature, possibly including its periphery, from an exemplary embodiment is possible, it then being possible for the said feature to be transferred to a generalized inventive concept. The absence of a feature (negative feature) in an exemplary embodiment shows that the feature is optional in relation to the invention. Furthermore, in the case of a type term for a feature, a generic term for the feature can also be implicitly understood (possibly further hierarchical breakdown into subgenus, etc.), as a result of which a generalization of the feature is possible, for example with consideration of equivalent effect and/or equivalence.

In the merely exemplary figures (Figs):

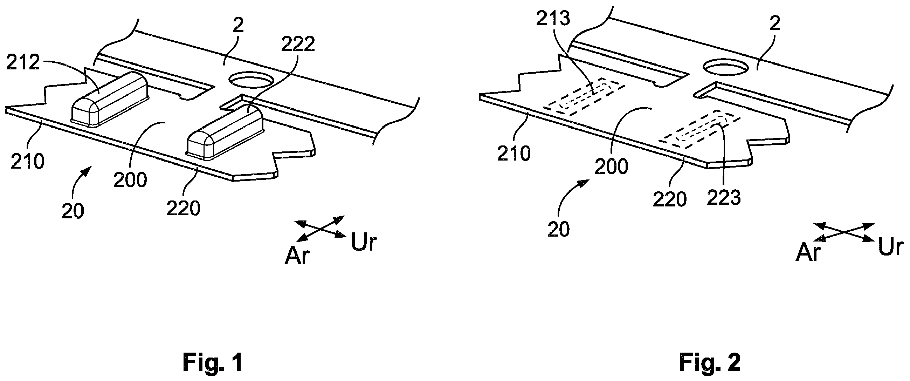

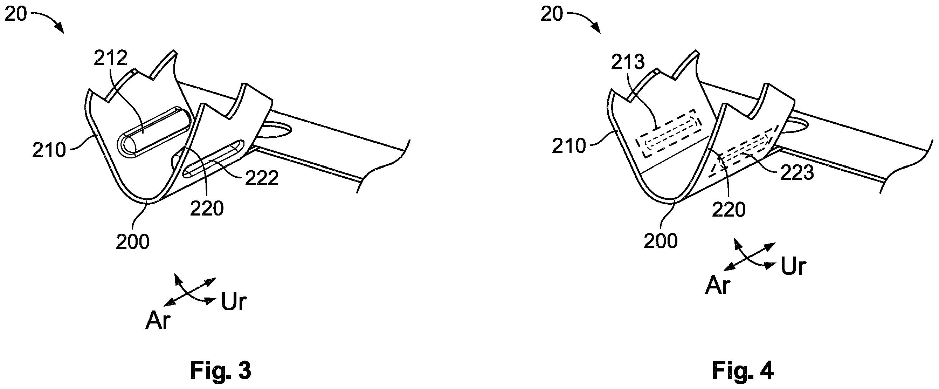

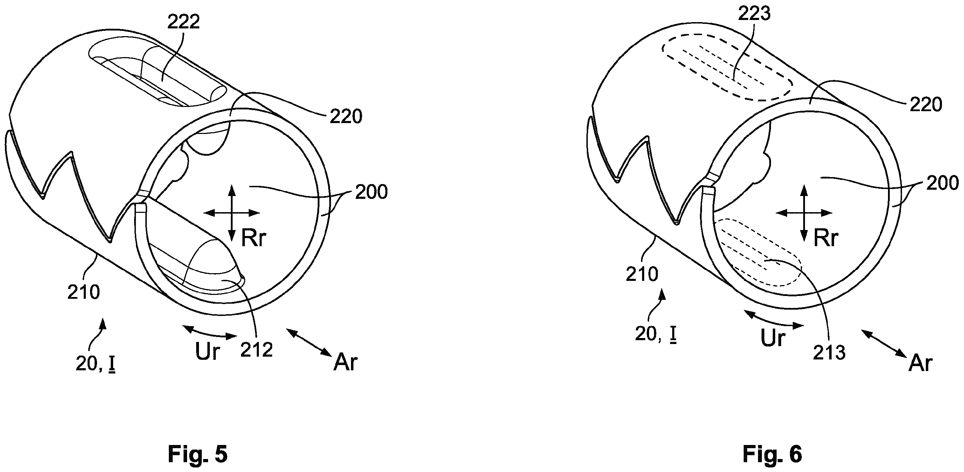

Figs 1 to 6 show a crimp ferrule according to the invention in an unbent state (Figs 1 and 2), a pre-bent state immediately before crimping (Figs 3 and 4) and a crimped state (Figs 5 and 6),
Figs 1, 3 and 5 show perspective views of the crimp ferrule from Figs 1 to 6, wherein the crimp ferrule is configured for being crimped onto a non-circular inner cross section of an electrical multi-core cable,
Figs 2, 4 and 6 show perspective views of the crimp ferrule from Figs 1 to 6, wherein the crimp ferrule is configured to be crimped onto a circular inner cross section of an electrical multi-core cable,

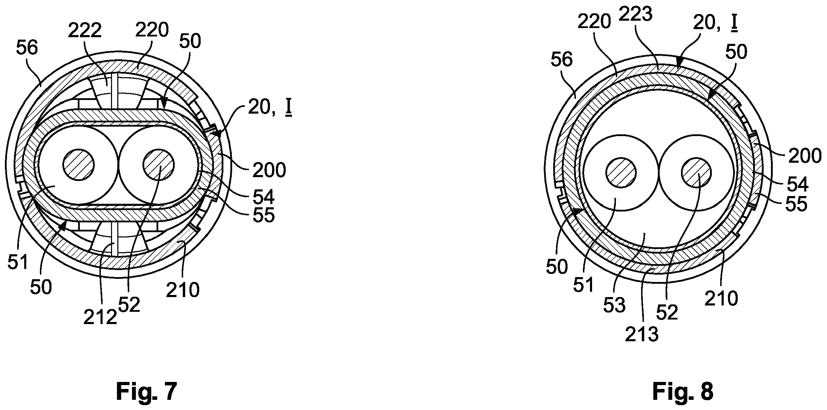

Figs 7 and 8 each show a two-dimensional cross section through a multi-core cable in the region of a crimp ferrule crimped onto its non-circular (Fig. 7) or circular (Fig. 8) inner cross section,
Figs 9 and 10 each show an embodiment of a method according to the inventionfor ferrule mounting the crimp ferrule from Figs 1 to 6 on an electrically stripped inner cross section of a multi-core cable, and

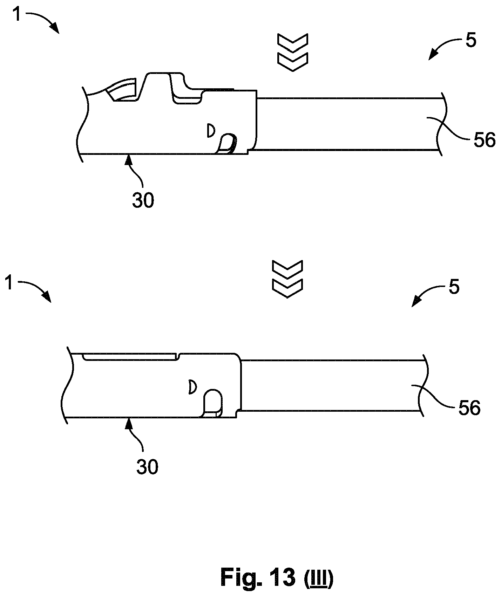

Figs 11 to 13 show three steps (Fig. 11: I, Fig. 12: II, Fig. 13: III) of an embodiment according to the invention of a method for assembling an electrical connecting device to/on a multi-core cable.

The invention is explained in more detail below on the basis of exemplary embodiments of one embodiment (Figs 1 to 6) of a variant of a crimp ferrule 20 according to the invention, in particular an hf-crimp ferrule 20, for an electrical connecting device 1 of an electrical multi-core cable 5; and two embodiments (Figs 9 and 10) of a methodfor ferrule mounting an electrical crimp ferrule 20, in particular an hf-crimp ferrule 20, on an electrically stripped inner cross section 50 of a multi-core cable 5. In this case, the multi-core cable 5 may be formed e.g. as a twisted-pair cable, a twinaxial cable etc. Accordingly, the connecting device 1 may be formed as a multi-core connecting device 1, such as e.g. a twisted-pair connecting device 1, a twinaxial connecting device 1 etc., and the crimp ferrule 20 may be formed as a multi-core crimp ferrule 20, such as e.g. a twisted-pair crimp ferrule 20, a twinaxial crimp ferrule 20 etc.

Although the invention is described and illustrated further in greater detail by way of preferred exemplary embodiments, the invention is not restricted by way of the disclosed exemplary embodiments, but rather is of more fundamental nature. Other variations can be derived therefrom and/or from the above (description of the invention), without departing from the scope of protection of the invention. The invention can be used in general in the electrical sector in the case of an electrical entity (cf. above). One exception is formed here by terrestrial electrical power engineering. The drawing shows only those spatial portions of the subject matter of the invention which are necessary for understanding of the invention. Designations such as connector and mating connector, terminal and mating terminal etc. are to be interpreted synonymously, that is to say may be mutually interchangeable.

Figs 1 to 6 show two formerly identical crimp ferrules 20 in three different states (Figs 1 and 2, Figs 3 and 4, and Figs 5 and 6). In the present case, a crimp ferrule 20 is defined in such a way that a crimp ferrule 20 has either at least one crimp diameter compensation means 212, 222; or a crimp ferrule 20 has had at least one crimp diameter compensation means 212, 222, that is to say has at least one former crimp diameter compensation means 213, 223.

Such a former crimp diameter compensation means 213, 223 can be identified e.g. as a residual of a crimp diameter compensation means 212, 222 on/in the crimp ferrule 20. In this respect, e.g. Fig. 2 very clearly shows a crimp ferrule 20; however, Fig. 10, on the far left, does not show a crimp ferrule 20 within the meaning of the invention (although a crimpable unit is illustrated here) since the at least one crimp diameter compensation means 212, 222 or the at least one former crimp diameter compensation means 213, 223 is omitted here.

A single crimp ferrule 20 is preferably formed from a substantially single material layer 200, 210, 220 (sheet) and comprises a circumferential centre portion 200 which preferably integrally connects a (first) circumferential flank 210 of the crimp ferrule 20 to a (second) circumferential flank 220 of the crimp ferrule 20. A centre of the circumferential centre portion is preferably situated opposite a crimp opening (cf. Figs 3 and 4) or a crimp slot (cf. Figs 5 and 6) of the crimp ferrule 20. The crimp ferrule 20 further has an extent in the axial direction Ar, which also corresponds to an axial direction Ar of the connecting device 1 and the multi-core cable 5. The crimp ferrule 20 further has, depending on its state (cf. below), an extent in the radial direction Rr and an extent in the circumferential direction Ur; wherein these directions Rr, Ur once again also correspond to those of the connecting device 1 and the multi-core cable 5.

Figs 1 and 2, Figs 3 and 4 and Figs 5 and 6 respectively show two formerly identical crimp ferrules 20 in each case in different states for the method illustrated in Fig. 9. Figs 1 and 2 each show the crimp ferrules 20 in an unbent state, Figs 3 and 4 each show the crimp ferrules 20 in a pre-bent state e.g. immediately before crimping, and Figs 5 and 6 each show the crimp ferrules 20 in a crimped state (without multi-core cables 5). Here, the crimp ferrule 20 of Figs 1, 3 and 5 serves to be crimped onto a non-circular inner cross section 50 of the multi-core cable 5 (cf. Fig. 7), whereas the crimp ferrule 20 of Figs 2, 4 and 6 serves to be crimped onto a circular inner cross section 50 of the multi-core cable 5 (cf. Fig. 8).

In the present case, the formerly identical crimp ferrules 20 differ in that that crimp ferrule 20 which was originally suitable for being crimped onto the non-circular inner cross section 50 of the multi-core cable 5 (Figs 1, 3 and 5) has been changed such that it is now suitable for being crimped onto the circular inner cross section 50 of the multi-core cable 5 (Figs 2, 4 and 6). In this case, the crimp ferrule 20 in question can be crimped, in particular, onto a cable shield 54, 55 of the multi-core cable 5, or is crimped onto this. In this case, the cable shield 54, 55 comprises, in particular, a shield film 54 and/or a shield conductor 55 or a shield conductor braid 55.

In particular, the crimp diameter compensation means 212, 222 is formed or established on/in the crimp ferrule 20 in such a way that the crimp ferrule, in addition to its required extents in the axial direction Ar and in the circumferential direction Ur, preferably projects inwards into the crimp ferrule 20 in the radial direction Rr (Figs 3 and 5). A crimp diameter compensation means 212, 222 pointing outwards in the radial direction Rr or projecting away from the crimp ferrule 20 may possibly be used.

In order that an outer shape (outer contour) of a crimp ferrule 20, which is intended to be crimped onto a non-circular inner cross section 50 of a multi-core cable 5, becomes or is substantially circular (because e.g. an outer shape of the multi-core cable 5 is substantially circular and/or for another reason), the crimp ferrule 20 has at least one crimp diameter compensation means 212, 222. Here, the at least one crimp diameter compensation means 212, 222 is formed or established on/in the crimp ferrule 20 in such a way that, by means of the crimp diameter compensation means, a non-circular inner cross section 50 different from a circular inner cross section 50 is changed to a mainly or substantially circular cross section (outer shape of the crimp ferrule 20) on the outside of the crimp ferrule 20.

In the case of radial Rr dimensioning of the crimp diameter compensation means 212, 222, it is of course necessary to take into account a radial Rr thickness of the crimp ferrule 20. Apart from this, a radial Rr thickness of the crimp diameter compensation means 212, 222, in particular substantially only in its centre in the circumferential direction Ur, is the size of a distance between a relatively small radius of the inner cross section 50 and a relatively large radius of this inner cross section 50, in particular a distance between a minimum radius (this is a minor axis radius in the case of an ellipse) of the inner cross section 50 and a maximum radius (this is a major axis radius in the case of an ellipse) of this inner cross section 50.

With preference, precisely two or at least two crimp diameter compensation means 212, 222 are formed or established on/in the crimp ferrule 20. More than two crimp diameter compensation means 212, 222 may possibly also be used. Here, the crimp diameter compensation means 212, 222 are provided rotationally symmetrically, in particular rotationally symmetrically through 180°, with respect to the axial direction Ar as the rotation axis on/in the crimp ferrule 20. - A crimp diameter compensation means 212, 222 may be formed or have been formed as a bead 212, 222, a rib, a stamped portion, a fold, a dimple etc. A plurality or a large number of individual devices can, of course, also be used, depending on the crimp diameter compensation means 212, 222.

In terms of association with or incorporation into an assembly method of an electrical connecting device 1 at/on a multi-core cable 5, a distinction can be drawn between at least two embodiments for mounting a crimp ferrule 20 according to the invention (ferrule mounting) on an inner cross section 50 of the multi-core cable 5 (Figs 9 and 10).

First (first embodiment), the ferrule mounting illustrated by way of example in Fig. 9. Here, a crimp ferrule 20 with at least one crimp diameter compensation means 212, 222 is always provided, wherein the type of crimp ferrule 20 required is preset or decided upon in each case in a crimping method. Either a crimp ferrule for a substantially non-circular inner cross section 50 (at the top in Fig. 9) or a crimp ferrule for a substantially circular inner cross section 50 (at the bottom in Fig. 9) is chosen.

If the former is the case, a crimp ferrule 20 with at least one crimp diameter compensation means 212, 222 is provided in a feed step and crimped onto a substantially non-circular inner cross section 50 of the multi-core cable 5, which inner cross section is stripped e.g. of a protective sheath 56 of the multi-core cable 5 (i.e. is partially or completely stripped of the protective sheath, e.g. has the protective sheath pulled off or removed) (from top left to (top) right in Fig. 9, and Fig. 11).

If the second is the case, a crimp ferrule 20 with at least one crimp diameter compensation means 212, 222 is provided in a feed step, and this at least one crimp diameter compensation means 212, 222 is then removed from the crimp ferrule 20 (cf. above, the crimp ferrule 20 now has at least one former crimp diameter compensation means 213, 223). Following this, the crimp ferrule 20 is then crimped onto a substantially circular inner cross section 50 of the multi-core cable 5, which cross section is stripped e.g. of a protective sheath 56 of the multi-core cable 5 (from top left to the bottom and from there to the (bottom) right in Fig. 9, analogously to Fig. 11).

And the second embodiment for the ferrule mounting illustrated by way of example in Fig. 10. Here, initially a blank of the crimp ferrule 20 (crimp ferrule blank both without at least one crimp diameter compensation means 212, 222 and also without at least one former crimp diameter compensation means 213, 223) is provided. In a preparation step for the ferrule mounting, at least one crimp diameter compensation means 212, 222 is established on/in the crimp ferrule 20 before the feed step. Following this, the crimp ferrule 20 is crimped onto an electrically stripped, substantially non-circular inner cross section 50 of the multi-core cable 5 (Fig. 10, Fig. 11).

Figs 11 to 13 show an embodiment of the assembly method according to the invention for the connecting device 1 at/on the multi-core cable 5, wherein an assembled multi-core cable is obtained.

In a first step I (from top to bottom in Fig. 11, arrows) of the assembly method, initially partial pulling-off of the protective sheath 56 of the multi-core cable 5 preferably takes place, wherein its cable shield 55 (here shield conductor braid 55) is exposed. Complete pulling off or partial or complete removal can, of course, likewise be used. After this, the crimp ferrule 20 is crimped onto this free longitudinal portion (ferrule mounting), wherein the ferrule 20 is substantially preferably plastically deformed.

Ferrule mounting is performed depending on whether the inner cross section 50 of the multi-core cable 5 is substantially non-circular (cf. Figs 1, 3, 5 and 7) or substantially circular (cf. Figs 2, 4, 6 and 8) (cf. above). Following the ferrule mounting, the possibly only partially removed longitudinal end portion of the protective sheath 56 is completely removed. Following this, the axial portion of the cable shield 55 projecting under the crimp ferrule 20 in the direction of a free longitudinal end, preferably without the cable shield 54 (shield film 54), is folded over onto the crimp ferrule 20.

In a second step II following the first step I (from top to bottom in Fig. 12, arrows) of the assembly method, first of all a remaining free longitudinal end portion of the multi-core cable 5 is prepared for fitting the inner terminals 10. Here, depending on the multi-core cable 5, a dielectric 53 and/or a possibly respective electrical insulation of the inner conductors 51, 52 of the multi-core cable 5 is removed from a remaining free end portion at a slight distance from the crimp ferrule 20 or the folded-over portion of the cable shield 54. The dielectric 53, in particular apart from the electrical insulations of the inner conductors 51, 52, is preferably present only in the case of multi-core cables 5 which have a substantially circular inner cross section 50 (cf. Fig. 8 together with 7). Following this, the inner terminals 10 (preferably two) are fitted to the multi-core cable 5 (cf. above).

In a third step III following the second step II (from top to bottom in Fig. 13, arrows) of the assembly method, an outer, electrical crimp terminal 30, in particular a shield contact sleeve 30, can be crimped onto the multi-core cable 5. Here, the shield contact sleeve 30 is crimped onto the crimp ferrule 20 or its folded-over portion of the cable shield 54 and further at the rear onto the protective sheath 56 of the multi-core cable 5. The preassembled (at the bottom in Fig. 12) multi-core cable 5 is moved into the shield contact sleeve 30, which is open at the top, from above, or vice versa, and/or into the shield contact sleeve 30, which is open at the rear, from the rear, or vice versa.

Since the trend in the case of high-speed data cables 5, e.g. in the case of multi-core cables 5, is for non-circular (oval, elliptical etc.) inner cross sections 50, the crimp ferrule 20 according to the invention (compensation (crimp) ferrule 20) can be used in considerably more such data cables 5, that is to say data cables 5 with non-circular and circular inner cross sections 50, and in so doing create a mechanically robust, electrically reliable and signal-stable (good signal integrity) cable connection. Furthermore, mechanical crimp forces can be better applied to/introduced into non-circular inner cross sections 50 using the crimp ferrule 20 according to the invention than using a comparable conventional crimp ferrule 20 (without at least one crimp diameter compensation means) for non-circular inner cross sections 50. - In particular, the crimp ferrule 20 according to the invention can also be crimped onto an inner cross section 50 of an electromagnetically shielded single-core cable 5, such as e.g. a coaxial cable 5.

### List of reference signs

- 1: (Electrical) (hf-)connecting device
- 2: Reel
- 5: (Electrical) (hf-)multi-core cable
- 10: (Inner, electrical) (hf-)(crimp) terminal, in particular pin, tab or socket terminal
- 20: (Electrical) (hf-)crimp ferrule
- 200: Circumferential centre portion, material layer of the crimp ferrule 20
- 210: (First) circumferential flank, material layer of the crimp ferrule 20
- 212: Crimp diameter compensation means, in particular bead
- 213: Former crimp diameter compensation means, in particular former bead
- 220: (Second) circumferential flank, material layer of the crimp ferrule 20
- 222: Crimp diameter compensation means, in particular bead
- 223: Former crimp diameter compensation means, in particular former bead
- 30: (Outer, electrical) (hf-)(crimp) terminal, in particular shield contact sleeve
- 50: Non-circular or circular inner cross section of the multi-core cable 5
- 51: (First) electrically insulated inner conductor
- 52: (Second) electrically insulated inner conductor
- 53: Dielectric (only cables with a substantially circular cross section)
- 54: Cable shield
- 55: Cable shield
- 56: Protective sheath
- I: First step of the assembly method
- II: Second step of the assembly method
- III: Third step of the assembly method
- Ar: Axial direction
- Rr: Radial direction
- Ur: Circumferential direction

## Claims

1. Electrical crimp ferrule (20), in particular hf-crimp ferrule (20), for an electrical connecting device (1) of an electrical multi-core cable (5) preferably for the motor vehicle sector, comprising a circumferential centre portion (200) which integrally connects a first circumferential flank (210) to a second circumferential flank (220) of the crimp ferrule (20), **characterized in that**,
in order to create a mainly or substantially circular crimp cross section on a non-circular or circular inner cross section (50) of the multi-core cable (5), the crimp ferrule (20) itself:
has at least one crimp diameter compensation means (212, 222) for crimping the crimp ferrule (20) onto the substantially non-circular inner cross section (50), or has had (213, 223) at least one crimp diameter compensation means (212, 222) for crimping the crimp ferrule (20) onto the substantially circular inner cross section (50).

2. Electrical crimp ferrule (20) according to the preceding claim, **characterized in that**:
• the crimp ferrule (20) has or has had (213, 223) precisely or at least two crimp diameter compensation means (212, 222),
• a crimp diameter compensation means (212, 222) is established or was established (213, 223) in a circumferential flank (210, 220) and/or the circumferential centre portion (200),
• the crimp ferrule (20) has or has had (213, 223) precisely one crimp diameter compensation means (212, 222) in each of its circumferential flanks (210, 220), and/or
• the crimp ferrule (20) does not have or has not had (213, 223) a crimp diameter compensation means (212, 222) in its circumferential centre portion (200).

3. Electrical crimp ferrule (20) according to one of the preceding claims, **characterized in that** the respective crimp diameter compensation means (212, 222):
• is established or was established (213, 223) integrally in the crimp ferrule (20),
• is formed or was formed (213, 223) as a projection (212, 222) projecting radially inwards into the crimp ferrule (20),
• is formed or was formed (213, 223) as a projection (212, 222) projecting radially outwards away from the crimp ferrule (20), and/or
• is formed or was formed (213, 223) as a bead (212, 222), a rib, a stamped portion, a fold or a dimple in the crimp ferrule (20).

4. Electrical crimp ferrule (20) according to one of the preceding claims, **characterized in that** the crimp diameter compensation means (212, 222) as a bead (212, 222):
• is formed or was formed (213, 223) as a longitudinal bead (212, 222) running substantially in a longitudinal direction (Lr) of the crimp ferrule (20),
• is established or was established (213, 223) with both of its longitudinal ends inside the crimp ferrule (20) in the longitudinal direction (Lr), and/or
• is established or was established (213, 223) with both of its circumferential ends inside the crimp ferrule (20) in the circumferential direction (Ur) of the crimp ferrule (20).

5. Electrical crimp ferrule (20) according to one of the preceding claims, **characterized in that**:
• a free edge of the crimp ferrule (20) extending in the longitudinal direction (Lr) is substantially free of an extent substantially solely in the longitudinal direction (Lr),
• the free edges of the crimp ferrule (20) situated opposite each other in the circumferential direction (Ur) are formed in a complementary manner and, in the crimped state of the crimp ferrule (20), are situated opposite each other substantially in a form-fitting manner, and/or,
• in the crimped state of the crimp ferrule (20), a circumferential tooth of a circumferential flank (210/220) engages between two circumferential teeth of the circumferential flank (210/220) situated opposite the first-said circumferential flank (210/220) in the circumferential direction (Ur).

6. Method for ferrule mounting an electrical crimp ferrule (20), in particular an hf-crimp ferrule (20), on an electrically stripped inner cross section (50) of a multi-core cable (5), **characterized in that**,
in a feed step of the method, a crimp ferrule (20) with at least one crimp diameter compensation means (212, 222) is provided for crimping the crimp ferrule (20) onto the inner cross section (50), wherein,
following the feed step, the crimp ferrule (20) is crimped onto an electrically stripped, substantially non-circular inner cross section (50) of the multi-core cable (5), or
the at least one crimp diameter compensation means (212, 222) is removed (213, 223) from the crimp ferrule (20) and the crimp ferrule (20) is crimped onto an electrically stripped, substantially circular inner cross section (50) of the multi-core cable (5).

7. Method for ferrule mounting according to the preceding claim, **characterized in that**, in a preparation step for ferrule mounting, at least one crimp diameter compensation means (212, 222) is established on/in the crimp ferrule (20),
wherein the at least one crimp diameter compensation means (212, 222) is preferably plastically formed in or preferably plastically formed out into a material layer (200, 210, 220) of the crimp ferrule (20).

8. Method for ferrule mounting according to one of the preceding claims, **characterized in that** the method is designed in such a way that, by way of the method, the originally same crimp ferrule (20) can be crimped onto both the non-circular and also the circular inner cross section (50).

9. Method for ferrule mounting according to one of the preceding claims, **characterized in that**, depending on a multi-core cable (5) available at the time of ferrule mounting, a crimp ferrule (20) currently to be crimped on is crimped either onto the electrically stripped, substantially non-circular or substantially circular inner cross section (50).

10. Method for ferrule mounting according to one of the preceding claims, **characterized in that** a crimp ferrule (20) to be crimped onto a substantially non-circular inner cross section (50) is placed with a crimp diameter compensation means (212, 222) onto a smaller or minimum diameter of the inner cross section (50).

11. Method for ferrule mounting according to one of the preceding claims, **characterized in that** the removal of the at least one crimp diameter compensation means (212, 222) from the crimp ferrule (20):
• takes place in a planar or pre-bent state of the material layer (200, 210, 220) of the crimp ferrule (20),
• takes place by way of levelling the material layer (200, 210, 220) of the crimp ferrule (20), and/or
• takes place by way of pressing the at least one crimp diameter compensation means (212, 222) out of the crimp ferrule (20).

12. Method for ferrule mounting according to one of the preceding claims, **characterized in that**:
• the crimp ferrule (20) is crimped onto a cable shield (54/55) of the multi-core cable (5),
• the cable shield (54/55) is folded over onto the crimp ferrule (20) after the crimp ferrule (20) has been crimped onto the inner cross section (50), and/or
• the crimp ferrule (20) is or was formed according to one of the preceding claims.

13. Method for assembling an electrical connecting device (1), in particular an hf-connecting device (1) at/on an electrical multi-core cable (5), **characterized in that**,
in a first step (I) of the method, the crimp ferrule (20) is crimped onto a cable shield (54, 55) of the multi-core cable (5) by way of a method for ferrule mounting according to one of the preceding claims,
in a second step (II) of the method following the first step (I), the inner terminals (10) are fitted onto the inner conductors (51, 52) of the multi-core cable (5), and,
in a third step (III) of the method following the second step (II), a shield contact sleeve (30) is crimped onto the crimp ferrule (20), or the cable shield (55) and a protective sheath (56) of the multi-core cable (5).

14. Electrical connecting device (1), in particular hf-connecting device (1) preferably for the vehicle sector, **characterized in that**
the connecting device (1) comprises an inner electrical terminal (10), a crimp ferrule (20) and an electrical shield contact sleeve (30), wherein the crimp ferrule (20) is formed according to one of the preceding claims.

15. Electrical entity, in particular hf-entity preferably for the vehicle sector, having an electrical connecting device (1), **characterized in that**
the connecting device (1) is formed according to the preceding claim, and/or
the connecting device (1) is mounted on an electrical multi-core cable (5) by way of an assembly method according to one of the preceding claims.
